# EUROPEAN PATENT APPLICATION

(11) **EP 1 865 247 A1**
(43) Date of publication of application: **12.12.2007**
(21) Application number: 06729651.7
(22) Date of filing: 22.03.2006
(51) Int. Cl.: F17C 9/02, F17C 5/06, B67D 5/04

(54) **METHOD FOR SUPPLYING HYDROGEN GAS AND CAR FOR TRANSPORTING LIQUEFIED HYDROGEN**

(30) Priority: 28.03.2005 JP 2005091829
(71) Applicant: Taiyo Nippon Sanso Corporation, Shinagawa-ku Tokyo 142-8558 (JP)
(72) Inventor: UTATA, Osamu, -chome, Shinagawa-ku, Tokyo, 1428558 (JP)
(74) Representative: Smyth, Gyles Darren
(86) International application number: PCT/JP2006/305684
(87) International publication number: WO 2006/103987

(57) **Abstract**

A method for supplying hydrogen gas, comprising: loading liquefied hydrogen produced at a plant on a liquefied hydrogen delivery vehicle, and transporting the liquefied hydrogen to a user's site by the liquefied hydrogen delivery vehicle; and pressuring and gasifying the transported liquefied hydrogen on the liquefied hydrogen delivery vehicle after arrival at the user's site to produce hydrogen gas, and then filling a storage vessel at the user's site with the hydrogen gas.

## Description

### TECHNICAL FIELD

The present invention relates to a method for supplying a hydrogen gas and a liquefied hydrogen delivery vehicle. Incidentally, the term "hydrogen" used herein indicates hydrogen in physicality and is a generic name of the matter including gaseous, liquid and other phases, whereas, the term "hydrogen gas" herein used designates hydrogen in a gaseous phase and the term "liquefied hydrogen" designates hydrogen in a liquid phase. The term "liquefied hydrogen delivery vehicle" used herein may be used interchangeably with "delivery vehicle".

This application claims priority on Japanese Patent Application No. 2005-091829 filed on March 28, 2005, the disclosure of which is incorporated by reference herein.

### BACKGROUND ART

Hydrogen is used in a variety of industries, as a raw material in petroleum and chemical industries, as an atmospheric gas in industries such as semiconductor, glass, and metal, and also as a fuel for hydrogen vehicles.

Hydrogen can be produced as a by-product gas of petroleum refinery, iron manufacturing and soda chemicals. It can also be produced by reforming and the like of natural gas and other hydrogen containing gases. Hydrogen which is produced in a production plant tends to contain impurities, and hydrogen is generally shipped in a pure state after purification.

Currently, hydrogen gas is transferred and supplied to a user (user's site) such as plants and laboratories where hydrogen is utilized by one of the following two methods in general.

### Delivery method 1 (gas transportation/gas supply)

Hydrogen gas is filled in an empty high pressure vessel. Then, the vessel is transported, for example, by a vehicle to a user and placed at a suitable location of the user. The vehicle carries back another empty high-pressure vessel from the user's site to the plant in return. The above process is repeated after on. In other word, hydrogen is transported and supplied in a gaseous phase in this method. This method is hereinafter called the "gas transportation/gas supply". Generally, hydrogen gas is compressed at 200 atm (20 MPa) in a high-pressure vessel.

### Delivery method 2 (liquid transportation/liquid supply)

Hydrogen gas is liquefied into liquefied hydrogen at a plant. The liquefied hydrogen is filled into a storage tank, and then a delivery vehicle loading the storage tank moves to a user while the hydrogen therein is maintained in the liquid phase. The delivered liquefied hydrogen is transferred to fill a storage tank at a user. Then, the delivery vehicle returns to the plant, and the process is repeated after on. In brief, hydrogen is transported and supplied in a liquid phase in this method. This method is hereinafter called the "liquid transportation/liquid supply".

The "liquid transportation/liquid supply" allows delivery of hydrogen in larger quantity than the "gas transportation/gas supply", because cryogenic liquefied hydrogen can be stored in a vessel at a low pressure around 2 atm, and hydrogen contracts its volume significantly when liquefied. For example, a vessel with a certain empty volume can contain approximately 5 times more of hydrogen in case of the "liquid transportation/liquid supply", compared to the "gas transportation/gas supply" which compresses hydrogen up to 200 atm. Thus, the "liquid transportation/liquid supply" method has an advantage in that it can deliver 5 times more volume of hydrogen. The "liquid transportation/liquid supply" method is suitable for mass transport of various industrial gases, such as oxygen, nitrogen and argon, and has been used for a long time.

The "gas transportation/gas supply" has a demerit in that the volume carried at a time of transportation is rather small, compared to the "liquid transportation/liquid supply" method, as described previously. The transportation volume can be increased by increasing the filling pressure of hydrogen gas in a pressure vessel. By increasing the pressure, for example, from the currently used 200 atm to 400 atm, the transportation volume simply doubles. However, since a considerable strength is required to withstand the high pressure, the current pressure vessels have to be made with thicker walls or the like. As a result, in such a case, the weight of a pressure vessel is the double or more, making it difficult to increase the filling pressure significantly, considering the load limits of vehicles.

Although light weight pressure vessels have been developed using materials, other than steel, having higher mechanical strengths and lighter weights, none of the vessels is safe enough to be practically available. Incidentally, the present inventors are not aware of any prior art, or any document, related to the present invention

On the other hand, the "liquid transportation/liquid supply" method is suitable for mass transport and is possible to transport at low pressures. Therefore, it is generally used for transportation of various industrial gases, such as oxygen and nitrogen. However, the "liquid transportation/liquid supply" can not be applied plainly to the case of liquefied hydrogen, unlike the cases of liquid oxygen and liquid nitrogen. The reason is as follows.

In the "liquid transportation/liquid supply" scenario, the user sites have to be equipped with storage tanks for liquefied hydrogen. Liquid oxygen has a boiling point of - 183°C and a latent heat of 70 kcal/Nm³, and liquid nitrogen has a boiling point of -196°C and a latent heat of 60 kcal/Nm³. In comparison with this, liquefied hydrogen has a boiling point of -253°C and a latent heat of 10 kcal/Nm³. In other words, liquefied hydrogen tends to gasify very easily, causing pressure buildup due to the vaporization of liquefied hydrogen. In order to prevent the pressure buildup, there have to be provided a special countermeasure against heat penetration into the storage tank from outside and recovery systems of gas vaporized from the liquid caused by the heat penetration. Those measures have to be implemented with special care in case of liquefied hydrogen, making the ancillary facilities complicated and expensive.

### DISCLOSURE OF THE INVENTION

### Problem to be Solved by the Invention

It is the object of the present invention to provide a novel hydrogen gas supply method, taking into consideration the fact that the conventional "liquid transportation/liquid supply" is not readily applicable to liquefied hydrogen. Means for Solving the problem

In the first aspect, the hydrogen delivery method of the present invention comprises: loading liquefied hydrogen produced at a plant on a liquefied hydrogen delivery vehicle, and transporting the liquefied hydrogen to a user's site by the liquefied hydrogen delivery vehicle; and
pressuring and gasifying the transported liquefied hydrogen to produce hydrogen gas on the liquefied hydrogen delivery vehicle after arrival at the user's site, and then filling a storage vessel at the user's site with the hydrogen gas.

In the second aspect, the present invention provides a liquefied hydrogen delivery vehicle comprises a delivery storage tank and equipments for pressurizing and gasifying the liquefied hydrogen.

### Effect of the Invention

According to the method for the "liquid transportation/gas supply" of the present invention, larger amount of liquefied hydrogen can be transported for the distance between a plant, from which liquefied hydrogen is transported, and a user's site, compared to the conventional "gas transportation/gas supply" method, and high transportation efficiencies can be achieved just as in the case wherein "liquid transportation/liquid supply" method is conducted for liquid oxygen and liquid nitrogen.

Furthermore, when liquefied hydrogen is filled into a storage vessel at a user's site from the delivery vehicle, liquefied hydrogen is gasified and filled at a desirable pressure. Because of this, the users need not prepare liquefied hydrogen storage tanks. That is, when the users have a storage vessel for hydrogen gas, the users can use said storage vessel in order to storage the transported hydrogen. The method of the present invention provides a high economical efficiency since the users do not have to invest on new facilities. The term "users" used herein primarily indicates ones consuming hydrogen, for example, in productions of certain products using hydrogen delivered. However, they also include relay stations, where delivered hydrogen is filled into smaller containers to be delivered to consumers, and stations, where hydrogen is filled into hydrogen fueled vehicles, and the like.

The liquefied hydrogen delivery vehicle of the present invention, especially the type of the vehicle which can vaporize liquefied hydrogen due to pressurization of the liquefied hydrogen, can maintain hydrogen at preferable temperatures higher than -30°C, more specifically -30°C to 30°C, at the time of supply. Accordingly, hydrogen can be supplied in a preferable manner to a storage vessel without adversely affect the storage vessels of users.

### BRIEF DESCRIPTION OF THE DRAWINGS

Fig. 1 A shows overall view which shows an example of the hydrogen delivery method of the present invention.
Fig. 1 B shows overall view which shows an example of the hydrogen delivery method of the present invention.
Fig. 2 shows a schematic diagram which shows an example of a liquefied hydrogen delivery vehicle of the present invention.
Fig. 3 shows a schematic diagram which shows an example of means for controlling temperature of a hydrogen gas supplying apparatus in the "liquid pressurization/gasification" method of the present invention.
Fig. 4 shows a schematic diagram which shows an example of a hydrogen gas supplying apparatus in the "gasification/gas-pressurization" method of the present invention.
Fig. 5 shows a schematic diagram which shows an example of a hydrogen gas supplying apparatus in the "simultaneous gasification and gas-pressurization" method of the present invention.

### Brief Description of Reference Symbols

20: Liquefied hydrogen delivery vehicle
21: Delivery storage tank
22: Pump
22: Vaporizer
26: Compressor
27: Check valve
28: Closed vessel
31: Storage vessel
40: Temperature controller
41: Flow control valve
42: Thermometer

### BEST MODE FOR CARRYING OUT THE INVENTION

The present invention will now be explained by describing preferred embodiments with reference to the attached drawings. It should be noted, however, that the present invention will not be limited to the following embodiments. Many variations, such as different combinations of components of the invention, or combinations with other components can be made as far as they do not cause any adverse effect.

The hydrogen gas delivering method of the present invention comprises the steps of loading liquefied hydrogen manufactured, for example, at a plant, on a liquefied hydrogen delivery vehicle and transporting liquefied hydrogen to a user; and pressuring and gasifying the liquefied hydrogen and then storing the hydrogen in a storage vessel at the user's site. The term "plant" used herein includes all the sites where liquefied hydrogen can be produced and/or delivered. Examples of the plants described in the present invention include plants wherein hydrogen gas is produced from liquefied natural gas, power plants of thermal, hydraulic and wind-power types wherein hydrogen is generated by electrolysis of water and any other plants wherein hydrogen is produced as a by-product. Any liquefied hydrogen, once produced in a plant, can be loaded on the hydrogen delivery vehicle of the present invention, even if any step and the like are conducted after the production of the hydrogen.

Incidentally, the step of "pressurizing and gasifying" of the present invention means to include at least one of the three methods of "the liquefied hydrogen is pressurized before gasifying", "the liquefied hydrogen is gasified before pressurizing" and "gasifying and pressurizing for the liquefied hydrogen is conducted simultaneously".

As described above, the delivery method of the present invention includes transportation of liquefied hydrogen and supplying of hydrogen gas at user's site, and is hereinafter denoted as a "liquid transportation/gas supply" method.

The liquefied hydrogen delivery vehicle of the present invention can carry out the aforementioned delivery/supply method and comprises a delivery storage tank, means for pressurizing the liquefied hydrogen and means for gasifying the liquefied hydrogen. Furthermore, means for controlling the temperature of hydrogen gas can be provided preferably at a downstream portion of the means for pressurizing the liquefied hydrogen and means for gasifying the liquefied hydrogen.

Materials and parts used for the delivery storage tank and the like of the present invention can be of any common types and is not limited. The term "means" used in the present invention may include apparatuses, methods, parts, components, steps and the like.

The "means for pressurizing the liquefied hydrogen and means for gasifying the liquefied hydrogen" may more specifically include "means for pressurizing the liquefied hydrogen included in the delivery storage tank using a pump and subsequently gasifying using a vaporizer", "means for gasifying the liquefied hydrogen included in the delivery storage tank using a vaporizer and subsequently compressing the resulting hydrogen gas", "means for pressurizing and gasifying in a closed vessel liquefied hydrogen included in the delivery storage tank simultaneously" and combinations thereof.

The pump in the above described means pressurizes cryogenic liquefied hydrogen in liquid state. The compressor in the above described means is a compressor wherein compression is conducted after introduction of hydrogen gas from the vaporizer, and hydrogen gas is compressed after liquefied hydrogen is vaporized.

The types of the pump and compressor are not limited according to the present invention, and any types can be used as long as any adverse effect is not caused. Preferably, the type that can raise the pressure up to the storage pressures of the storage vessels at user's sites maybe used. The type of the vaporizer is also not limited and can be selected based on requirements. Atmospheric vaporizers, which exchange heat with atmosphere, are economical and may preferably be used, however, other types, for example the one using the blow of hot air or any other compulsive heating, may be used. In case the vaporizer is placed after the pump, a high pressure type vaporizer should preferably be used, because the incoming liquefied hydrogen is pressurized by the pump. In case the vaporizer is connected directly to the delivery storage tank, the vaporizer may only have the same pressure rating as the delivery storage tank.

The following explains an example of the aforementioned "means for pressurizing and gasifying in a closed vessel liquefied hydrogen included in the delivery storage tank simultaneously", which is cited in the thirdly.

There are provided a check valve and a supply pipe, between the delivery storage tank and the closed vessel, allowing flow of liquefied hydrogen only in the direction from the delivery storage tank to the closed vessel, and an exit valve disposed on another supply pipe connected at the closed vessel. Liquefied hydrogen is introduced into the closed vessel from the delivery storage tank with the exit valve open. Subsequently, the exit valve is closed and the liquefied hydrogen in the closed vessel is vaporized naturally. Due to the natural evaporation of the liquefied hydrogen, the hydrogen expands. However, the volume within the closed vessel is fixed. Accordingly, the pressure inside the closed vessel rises, pushing vaporized hydrogen back to the delivery storage tank, however, the flow to the delivery storage tank is blocked by the check valve. As the gasification of liquefied hydrogen in the closed vessel proceeds, the pressure inside the closed vessel increases. When almost all the liquefied hydrogen in the closed tank is vaporized and turns into hydrogen gas, the exit valve is opened to fill the storage vessel at the user's site with hydrogen gas.

As described, the closed vessel should have a capability to gasify liquefied hydrogen. The vessel may be of any structure and may have other apparatuses and instruments as long as it has the aforementioned capability. For example, the structure of the closed vessel may be the one that has fins on the external surface in order to exchange heat with atmosphere, or the one that has a heating device such as electrical heaters. The closed vessel may also have a capability of filling the storage vessels at the user's sites with the hydrogen gas. The closed vessel should preferably have a pressure rating higher than that of the storage vessels at the user's sites, and the portion between the closed vessel and the check valve should preferably have an enough pressure rating also. Incidentally, the closed vessel is preferably designed in such a way that the pressure inside the closed vessel can be controlled arbitrarily, so that the pressure of hydrogen gas inside the closed vessel can be increased to a degree which is sufficient to fill the storage vessels at the user's sites.

The following explains a preferable example of the means for controlling the temperature of hydrogen gas. A flow control valve and a thermometer are disposed on the supply pipe supplying hydrogen gas to storage vessels at the. user's sites. By controlling the flow control valve using the thermometer, the temperature of the hydrogen gas flowing inside the supply pipe is controlled, preferably, within the range of -30°C to 30°C.

In the present invention, liquefied hydrogen is supplied to users after gasification thereof. Low temperature brittleness of materials used in the method has to be taken into consideration because of the extremely low temperature of liquefied hydrogen. Furthermore, similar to a case wherein the temperature of a tire increases when it is pumped up, temperature rise is caused due to adiabatic compression which is caused when hydrogen gas is introduced into the storage vessel at the user's site, and therefore, adiabatic compression has to be accounted for.

Regarding the temperature rise of hydrogen gas due to adiabatic compression, the filling pressures required for storage vessels at the user's sites are usually the pressures at the ambient temperature. If the temperature rise of hydrogen gas due to adiabatic compression is ignored, a pressure is reached prematurely to the predetermined degree due to expansion of gas caused by the temperature rise and, when the temperature of the storage vessel lowers to the ambient temperature after filling, the filling pressure tends to lower.

Because of this, it is preferable to fill hydrogen gas at a low temperature while controlling the temperature rise due to adiabatic compression, so that a desired pressure after the filling is attained when the temperature of the storage vessel at the user's site is decreased to the ambient temperature from the temperature immediately after the filling. The filling pressure of a storage vessel is usually in the range of about 20 MPa to 40 MPa, but is not limited in the present invention, as far as the pressure causes no problem.

The following describes the issue of low temperature brittleness. Hydrogen gas can be supplied at a cryogenic temperature insofar as the temperature is within an allowable range, since temperature rise due to adiabatic compression is generated in the storage vessels at the user's sites. However, the connecting portion between the delivery vehicle and storage vessel at the user's site may be damaged due to low temperature brittleness when the temperature is extremely low, although it may be depend on materials of the connecting portion. In addition, the storage vessel, which rises its temperature due to adiabatic compression as described previously, may generate cracks or the like due to low temperature brittleness, when the vessel comes in contact with liquefied hydrogen even for a short period of time. Chromium-molybdenum steel, or stainless steel, especially the former for economic reasons, is typically used for the, material of the storage vessels at the user's sites because of their resistance against hydrogen brittleness

The apparatus and parts used in the present invention can be made of any materials as far as they do not cause those problems. The chromium-molybdenum steel has an excellent resistance against hydrogen brittleness; however, its mechanical strength decreases significantly at around - 30ºC. Because of this, the temperature of hydrogen gas to be supplied should preferably be controlled when hydrogen gas is supplied from the delivery vehicle to the storage tank at the user's site, taking into consideration the strength of the materials used.

Examples of the means for controlling the temperature of the hydrogen gas includes a method wherein the temperature inside the supply pipe is measured and the opening of the supply valve in the delivery vehicle is adjusted in accordance with said temperature to control the filling speed of the hydrogen gas, or a method wherein feeding amount to the vaporizer and the vaporization means from the delivery storage tank is controlled. Incidentally, the temperature may be measured and controlled by any position and method in the present invention.

As described above, in accordance with the delivery vehicle of the present invention, liquefied hydrogen transported can be gasified, and hydrogen gas is filled into the vessels at the user's sites, and it can be conducted in a safe manner.

Examples of the liquefied hydrogen delivery vehicle, or the delivery vehicle includes; a vehicle with a delivery storage tank fixed on the body; a container type vehicle wherein a transportable carriage with a delivery storage tank is towed by a vehicle or a truck; and a vehicle equipped with means for pressuring and vaporizing, on which a removable delivery storage tank, which can be filled with liquefied hydrogen in a plant, can be loaded.

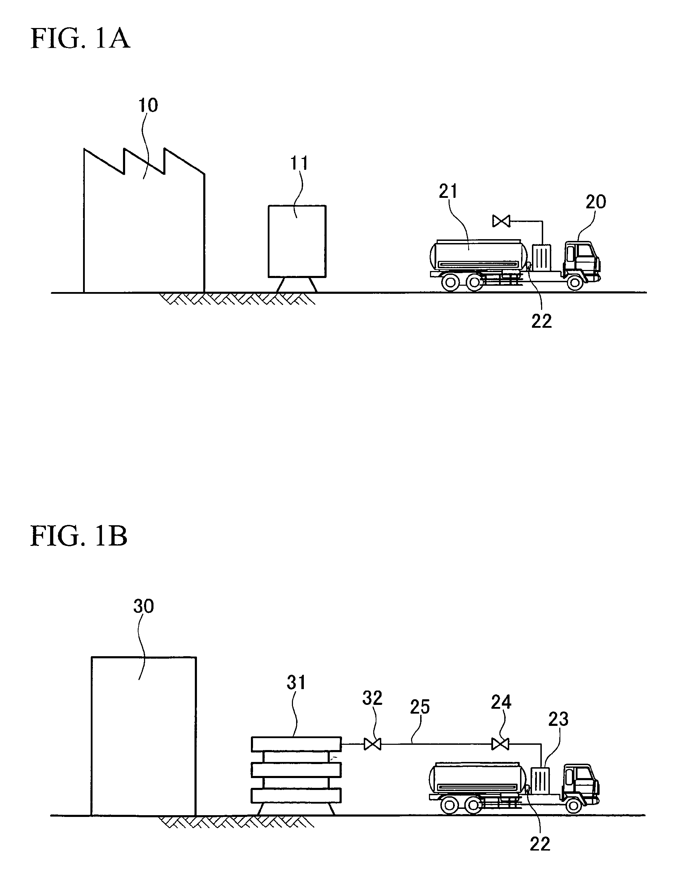

Fig. 1 A and B show overall views of examples of the hydrogen gas delivery method of the present invention. The components and parts shown in the figures are not limited in their numbers, positions, size and capacities, as far as they do not cause any problem. More than one component/part, for example, may be used even when the figures show only one component/part. Liquefied hydrogen produced at the plant 10 is stored in the supply tank 11 (see Fig. 1-A). Liquefied hydrogen in the supply tank 11 is transferred to the delivery storage tank 21 of the delivery vehicle 20 by a pump (not shown) and through a charge hose (not shown). The pressure inside the delivery storage tank 21 is about 2 atm, and the temperature of liquefied hydrogen is approximately -253°C.

When the delivery vehicle 20 loaded with liquefied hydrogen arrives at a user's site 30, liquefied hydrogen in the delivery storage tank 21 is vaporized into hydrogen gas and then filled into the storage vessel 31 (Fig. 1-B). In case of a delivery vehicle wherein liquefied hydrogen is transferred from the delivery storage tank 21 to a pump 22 and subsequently to a vaporizer 23, for example, hydrogen is supplied through the exit valve 24 of the vaporizer 23 connected to the entrance valve 32 of the storage vessel 31 via the supply pipe 25.

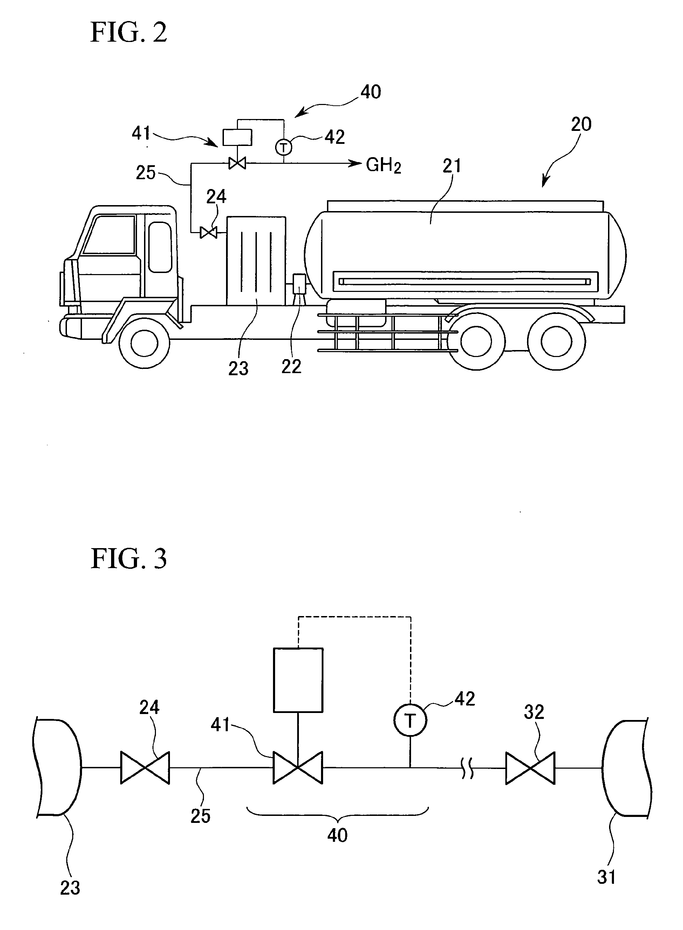

The following explains the details of filling according to Fig. 2.

There are three types of filling methods according to the present invention; namely "liquid pressurization /gasification", in which liquefied hydrogen is first pressurized and then gasified, "gasification / gas pressurization", in which liquefied hydrogen is first gasified and then pressurized, "in-parallel gasification/pressurization", in which liquefied hydrogen is gasified and pressurized in parallel. In the following, the explanation for each method will be made in this order.

### "Liquid pressurization/gasification"

In the method, as those in the delivery vehicle shown in Fig. 2, liquefied hydrogen in the delivery storage tank 21 is compressed at about 200 atm with a pump 22, and then vaporized with vaporizer 23. Liquefied hydrogen exchange heat with atmosphere when passing through the vaporizer 23 and hydrogen gas exiting from the vaporizer 23 has slightly lower temperature than atmosphere. Hydrogen gas from vaporizer 23 is filled into the storage vessel 31 via the exit valve 24, supply pipe 25 and entrance valve 32. An assembly of a plurality of vessels can be used for the storage tank 31 for pressure resistance in general.

In this way, the liquefied hydrogen in the delivery storage tank 21 is filled into the storage vessel 31 at the user's sites as a hydrogen gas. Care has to be taken, because liquefied hydrogen in the delivery storage tank 21 is at a cryogenic temperature. If a too large amount of liquefied hydrogen is fed from the delivery storage tank 21 to the vaporizer 23, heat exchange is conducted insufficiently at the vaporizer 23, and therefore the temperature of hydrogen gas at the exit of the vaporizer 23 becomes so low that it may cause low temperature brittleness of the parts such as the connection between the supply pipe 25 and entrance valve 32. Also, in some cases, liquefied hydrogen may still remain in the hydrogen gas and may cause low temperature brittleness of the storage vessel 31.

Thus, it is preferable to control the temperature of hydrogen gas by a suitable means. Any suitable method can be used. One example is to adjust the opening of the exit valve 24 to close direction and reduce the flow to the storage vessel 31, when a large amount of frost is observed on the vaporizer 23, since the frost indicate that heat exchange is not catching up the flow of the liquefied hydrogen. Another example is to measure the temperature of the gas in the supply pipe directly to control the opening of the exit valve 24. Yet another example is to control the flow of liquefied hydrogen to the vaporizer 23.

The temperature of the hydrogen gas supplied into the storage vessel 31, on the other hand, increases due to adiabatic compression. It is, therefore, desirable to supply hydrogen gas at a temperature as low as possible. It is preferable to control the temperature of hydrogen gas in the vicinity of the exit valve from about -30°C to 30°C. Temperatures lower than -30°C may cause low temperature brittleness, whereas, temperatures higher than 30°C may cause insufficient filling due to an increase of the temperature caused by adiabatic compression at the time of filling. Incidentally, the numbers and volumes of delivery storage tanks 21 and storage vessels 31 are not limited in the present invention, and any numbers and volumes can be chosen.

It is also possible to automatically control the aforementioned temperatures. An example is shown in Fig. 3. A temperature control means 40 is disposed on the supply pipe 25 connecting between the exit valve 24 and entrance valve 32. The temperature control means 40 comprises a flow control valve 41 disposed on the supply pipe 25, a thermometer 42 measuring the temperature of gas inside the supply pipe 25 and a control mechanism to control the opening of the flow control valve 41 based on the signal from the thermometer 42. The arrangement allows automatic control of the temperatures of hydrogen gas supplied to the storage vessel 31 within a pre-specified temperature range.

Incidentally, the flow control valve 41 may function as the exit valve 24 at the same time. Instead of providing the flow control valve 41, it is possible to manually control the opening of the exit valve 24 based on warning sounds generated when the thermometer 42 measures temperatures higher, or lower, than the specified temperature range.

Although Fig. 2 shows an example wherein the vaporizer 23 is disposed between the driver's cabin and the delivery storage tank 21, the position of the vaporizer 23 can be determined based on the total weight balance and the like of the delivery vehicle. For example, the vaporizer 23 may be placed rearward (at the end of the carriage), above, below and/or sides or the like of the delivery storage tank 21. Numbers of the vaporizer(s) and delivery tank(s) may be determined arbitrarily.

### "Gasification/gas-pressurization"

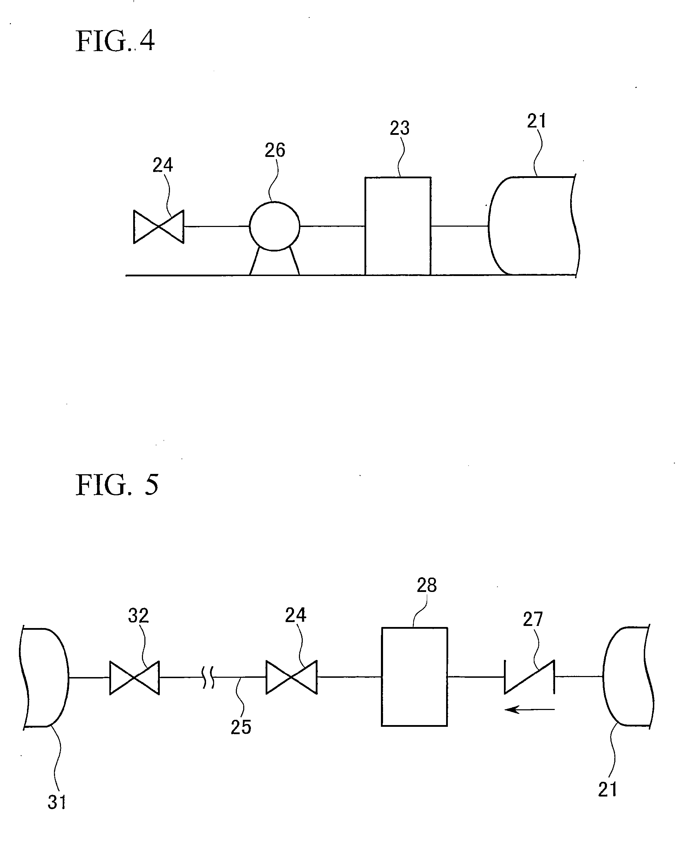

This form is that shown as an example in Fig. 4. The liquefied hydrogen in the delivery storage tank 21 is introduced into the vaporizer 23 and gasified by the vaporizer 23, and then compressed by the compressor 26. It is preferable to avoid the temperature of the hydrogen gas from the vaporizer 23 becoming too low, since the compressor 26 is usually designed to compress gas having ambient temperature. Other than that, similar care has to be taken as in the case of the aforementioned "Liquid pressurization/gasification".

### "In-parallel gasification/pressurization"

This form is that shown as an example in Fig. 5. A check valve 27 and a closed vessel 28 are disposed in this order between the delivery storage tank 21 and exit valve 24. The exit valve 24 is first opened and liquefied hydrogen is introduced into the closed vessel 28 from the delivery storage tank 21. The exit valve 24 is closed when predetermined amount of liquefied hydrogen is filled. Other apparatuses may be placed on the supply pipe between the entrance valve 32 an exit valve 24. The check vale 27 allows flow toward the direction to the closed vessel 28 only, as indicated by an arrow in the figure, and prevents a reverse flow. Therefore, liquefied hydrogen is closed in the closed vessel 28. Under the condition, liquefied hydrogen in the closed vessel 28 is vaporized by heat from outer atmosphere and gasifies in the closed vessel 28 into hydrogen gas, thus raising the pressure inside the closed vessel 28. When a predetermined pressure is reached inside the closed vessel 28, the exit valve 24 and entrance valve 32 are opened. Hydrogen gas is thus filled into the storage vessel 31. Preferably, the system of this embodiment is preferably designed in such a way that filling is completed in one attempt.

The above embodiments have been described based on examples of tank trucks, on which delivery storage tanks are fixed on vehicles. However, the present invention is not limited to such examples. For example, a mobile carriage with a delivery storage tank may be used with a towing vehicle; or, a detachable delivery storage tank may be used, wherein the detachable delivery storage tank is filled with liquefied hydrogen at a plant, and then the filled detachable delivery storage tank is mounted on a truck having a pressurizing/gasifying means.

### INDUSTRIAL APPLICABILITY

The present invention provides a novel method for supplying hydrogen gas and a liquefied hydrogen delivery vehicle, which can replace the conventional "liquid transportation/liquid supply" and "gas transportation/gas supply". The present invention is applicable to various industries using hydrogen gas, including petroleum, chemical, semiconductor, glass, metal and automobile industries, and provides a method for supplying hydrogen gas in significantly high economical efficiencies with much less investment.

## Claims

1. A method for supplying hydrogen gas, comprising:
loading liquefied hydrogen produced at a plant on a liquefied hydrogen delivery vehicle, and transporting the liquefied hydrogen to a user's site by the liquefied hydrogen delivery vehicle; and
pressuring and gasifying the transported liquefied hydrogen to produce hydrogen gas on the liquefied hydrogen delivery vehicle after arrival at the user's site, and then filling a storage vessel at the user's site with the hydrogen gas.

2. The method for supplying hydrogen gas according to claim 1, wherein said pressuring and gasifying step is at least one of (i) the liquefied hydrogen is pressurized before gasifying, (ii) the liquefied hydrogen is gasified before pressurizing, and (iii) gasifying and pressurizing for the liquefied hydrogen are conducted simultaneously.

3. A liquefied hydrogen delivery vehicle comprising:
a delivery storage tank, and
equipment for pressuring and gasifying the liquefied hydrogen in the delivery storage tank.
